# EUROPÄISCHE PATENTSCHRIFT

(11) **EP 2 388 129 B1**
(45) Veröffentlichungstag und Bekanntmachung des Hinweises auf die Patenterteilung: **07.05.2014**
(21) Anmeldenummer: 11166829.9
(22) Anmeldetag: 20.05.2011
(51) Int. Cl.: B29C 49/46, B65B 55/02, B67C 7/00, B29C 49/12, B29C 49/36, B29C 49/42, B65G 47/84

(54) **Vorrichtung zum Umformen von Kunststoffvorformlingen mit Sterilraum**
Device for reforming plastic pre-forms with a sterile area
Dispositif de déformation d'ébauches en matière synthétique dotées d'un espace stérile

(30) Priorität: 20.05.2010 DE 102010022128
(43) Veröffentlichungstag der Anmeldung: 23.11.2011
(73) Patentinhaber: Krones AG, 93073 Neutraubling (DE)
(72) Erfinder: Voth, Klaus, 93083 Obertraubling (DE); Martini, Oliver, 4054 Basel (CH); Lappe, Ulrich, 93073 Neutraubling (DE); Söllner, Jürgen, 93176 Beratzhausen (DE); Winzinger, Frank, 85354 Freising (DE); Hausladen, Josef, 93086 Wörth/Donau (DE)
(74) Vertreter: Bittner, Bernhard

(56) Entgegenhaltungen:
- EP-A1- 2 246 176
- EP-A2- 2 186 770
- DE-A1-102008 038 141
- FR-A1- 2 882 341

## Beschreibung

Die vorliegende Erfindung bezieht sich auf eine Vorrichtung zum Umformen von Kunststoffbehältnissen. Im Bereich der getränkeherstellenden Industrie ist es bekannt, Kunststoffbehältnisse zu verwenden, wobei diese Kunststoffbehältnisse durch einen Umformungsvorgang, und insbesondere einen Blasvorgang, aus Kunststoffvorformlingen erzeugt werden. Dabei sind üblicherweise Blasräder vorgesehen, an denen mehrere Blasstationen angeordnet sind, wobei innerhalb dieser Blasstationen die Kunststoffvorformlinge durch Beaufschlagung mit Druckluft gegen eine Innenwandung der entsprechenden Blasform expandiert werden.

Für viele Getränke ist es dabei erforderlich, diese unter aseptischen Bedingungen abzufüllen. Dabei ist es bekannt, dass ein Sterilisationsprozess für das aseptische Abfüllen mit der Sterilisation der bereits fertig gestellten Flaschen in einem dafür vorgesehen Reinraum beginnt. Alle im Stand der Technik davor stattfindenden Prozesse wie die Preform-Herstellung, deren Transport, deren Erwärmung und deren Blasen zur Flasche finden in einer unsterilen Umgebung statt. In diesem Falle ist es erforderlich, eine relativ große Fläche, nämlich diejenige der fertig erzeugten Kunststoffflasche, zu sterilisieren.

Das Sterilisieren von Behältnissen, welche mit sensiblem Füllgut befüllt werden sollen, kann beispielsweise dadurch geschehen, dass das Füllgut erhitzt und heiß abgefüllt wird und mit dem heißen Füllgut die Flascheninnenseite mit entkeimt wird. Weiterhin ist es auch möglich, dass das leere Behältnis vor dem Füllvorgang separat entkeimt wird und unter aseptischen Bedingungen mit an anderer Stelle sterilisiertem Füllgut befüllt wird. Die Sterilität des leeren Behältnisses wird dabei durch chemische Desinfektionsmittel wie Peressigsäure (nass) oder Wasserstoffperoxid (trocken) erreicht. Dazu werden die Behältnisse in einen sogenannten Isolator gefahren, in dem sie mit dem Desinfektionsmittel beaufschlagt werden, welches eine bestimmte Zeit einwirken muss und anschließend mit hohem Aufwand wieder entfernt werden muss. Hierbei entsteht eine Restmengenproblematik. Direkt im Anschluss an diesen Isolator ist der aseptisch gekapselte Füller angeordnet. Diese Technologie ist jedoch noch relativ aufwendig.

Daher ist es meist wünschenswert, nicht die Kunststoffflasche selbst zu sterilisieren, sondern den Kunststoffvorformling, da dieser eine erheblich geringere Oberfläche aufweist. Allerdings ist es erforderlich, die Behältnisse nach deren Sterilisation, insbesondere durchgängig, unter sterilen Bedingungen zu transportieren, zumindest bis diese verschlossen sind, um auf diese Weise eine weitere Verunreinigung der Behältnisse zu verhindern.

Die EP 0 794 903 B1 beschreibt ein System und ein Verfahren zum sterilen Verpacken von Getränken. Dabei wird ein Getränkebehälter aus einem geformten Vorformling durch Blasformgebung gebildet, anschließend wird der Behälter mit einem sterilen Getränk befüllt und schließlich der gefüllte Behälter mit einer sterilisierten Verschlusskappe gefüllt. Dabei werden unterschiedliche Sterilisationsgrade in verschiedenen Teilen der Kammer gesteuert, wobei die Sterilisationsgrade mit dem Grad korreliert sind, der für den Verfahrensschritt erforderlich ist, der in den betreffenden Kammerteil durchgeführt wird.

In diesem Herstellungsverfahren wird der gesamte Herstellungsprozess der Flasche und auch der Füll- und Verschließprozess durchgängig unter sterilen Bedingungen durchgeführt. Dabei ist auch eine vollständige Umformungseinheit der Behältnisse in einem Reinraum angeordnet. Dieses Verfahren gewährleistet einen hohen Sterilisierungs- und Reinheitsgrad der auf diese Weise befüllten Behältnissen. Andererseits ist jedoch der Aufwand für die Sterilisierung relativ hoch, da einerseits sehr große Räume steril gehalten werden müssen und andererseits auch eine Vielzahl von Maschinenteilen, namentlich im Bereich der Blasvorrichtung vorhanden sind, die steril gehalten werden müssen.

Der vorliegenden Erfindung liegt daher die Aufgabe zugrunde, den Aufwand zum Sterilisieren bzw. Sterilhalten einer Umformungseinheit, bzw. Blaseinrichtung für Behältnisse zu reduzieren. Andererseits sollten jedoch für die Behältnisse möglichst sterile Herstellungsbedingungen geschaffen werden. Dies wird erfindungsgemäß durch eine Vorrichtung nach Anspruch 1 und ein Verfahren nach Anspruch 15 erreicht. Vorteilhafte Ausführungsformen und Weiterbildungen sind Gegenstand der Unteransprüche.

Eine in der WO 2010 020 529 A2 beschriebene Vorrichtung zum Umformen von Kunststoffvorformlingen zu Kunststoffbehältnissen weist eine Transporteinrichtung auf, an der eine Vielzahl von Blasstationen angeordnet ist, wobei jede dieser Blasstationen eine Blasform aufweist, innerhalb derer ein Kunststoffvorformling zu einem Kunststoffbehältnis umformbar ist und wobei die Vorrichtung einen Reinraum aufweist, innerhalb dessen die Behältnisse transportiert werden können. Weiterhin ist derjenige Bereich der Transporteinrichtung, an dem die Blasstationen angeordnet sind, in dem Reinraum angeordnet und ein weiterer Bereich der Transporteinrichtung ist außerhalb des Reinraums angeordnet.

Damit ist bei dieser Vorrichtung ein Reinraumkanal vorgesehen, durch welchen hindurch die Kunststoffvorformlinge bzw. Behältnisse in den Blasstationen geführt werden und ein weiterer Bereich der Transporteinrichtung wird au βerhalb des Reinraums bewegt. Damit werden Teile der Umformungseinheit wie einer Blasmaschine, z. B. das gesamte Blasrad bzw. die Blaskavitäten durch einen Reinraum bzw. abgeschlossenen Isolator von dem Rest der Blasmaschine getrennt.

Der Gegenstand der WO 2010 020 529 A2 wird hiermit durch Bezugnahme vollständig auch zum Gegenstand der vorliegenden Anmeldung gemacht. Die Anmelderin hat jedoch festgestellt, dass zwar mit der oben genannten Vorrichtung der WO 2010 020 529 A2 bereits zufriedenstellende Ergebnisse erreicht werden können, jedoch eine weitere Reduzierung der Reinraumvolumina möglich ist.

Weitere Vorrichtungen zum Umformen von Kunststoffvorformlingen mit Sterilraum sind aus der EP 2 246 176 A1 und der DE 10 2008 038 141 A1 bekannt.

Eine erfindungsgemäße Vorrichtung zum Umformen von Kunststoffvorformlingen zu Kunststoffbehältnissen weist daher eine Transporteinrichtung auf, an der eine Vielzahl von Blasstationen angeordnet ist, wobei jede dieser Blasstation eine Blasform aufweist und die Vorrichtung einen Reinraum aufweist, innerhalb dessen die Kunststoffvorformlinge transportiert werden können. Weiterhin weist jede Blasform zwei Seitenteile und ein Bodenteil auf, wobei die Seitenteile und das Bodenteil gemeinsam einen Hohlraum ausbilden, innerhalb dessen ein Kunststoffvorformling zu einem Kunststoffbehältnis umformbar ist. Dabei sind wenigstens die diesen Hohlraum begrenzenden Bereiche der Seitenteile und des Bodenteils stets innerhalb des Reinraums angeordnet. Weiterhin ist wenigstens eine Antriebseinrichtung zum Bewegen der Seitenteile und/oder wenigstens zum Bewegen des Bodenteils vorgesehen.

Erfindungsgemäß ist wenigstens eine der Antriebseinrichtungen bzw. die Antriebsrichtung, welche eine Öffnungs- oder Schließbewegung der Blasform bewirkt, wenigstens teilweise außerhalb des Reinraums angeordnet und eine Dichtungseinrichtung vorgesehen, welche den Reinraum gegenüber einem Bereich, in dem die Antriebseinrichtung angeordnet ist, abdichtet. Es wird daher erfindungsgemäß vorgeschlagen, wenigstens eine Antriebseinrichtung, welche eine Öffnungs- oder Schließbewegung der Blasform bewirkt, außerhalb des Reinraums anzuordnen. Auf diese Weise kann das Volumen des Reinraums gegenüber dem Stand der Technik weiter reduziert werden.

Bevorzugt ist eine Antriebseinrichtung vorgesehen, um das Bodenteil zu bewegen, sowie eine weitere Antriebseinrichtung, um die Seitenteile zu bewegen. Es wäre jedoch auch möglich, dass lediglich eine Antriebseinrichtung vorgesehen ist und über eine Kopplungseinrichtung eine Bewegung der Seitenteile an eine Bewegung des Bodenteils gekoppelt wird. Dabei ist es möglich, dass diese Kopplungseinrichtung wenigstens teilweise innerhalb des Reinraums angeordnet ist, es wäre jedoch auch möglich, dass die Kopplungseinrichtung vollständig außerhalb oder vollständig innerhalb des Reinraums vorgesehen ist.

Vorteilhaft ist wenigstens eine der außerhalb des Reinraums angeordneten Antriebseinrichtungen über eine Kopplungseinrichtung mit wenigstens einem Seitenteil oder mit dem Bodenteil gekoppelt und diese Kopplungseinrichtung erstreckt sich durch eine Grenze des Reinraums hindurch. Vorteilhaft wird der Reinraum durch eine Wandung begrenzt, wobei es sich hierbei um eine flexible oder eine starre Wandung handeln kann. Diese Wandung stellt dabei vorteilhaft auch die Grenze des Reinraums zu dem nicht sterilen Außenbereich dar. Unter einer Kopplungseinrichtung wird hier insbesondere eine mechanisch wirkende Einrichtung verstanden, welche eine Bewegung der Antriebseinrichtung auf das Bodenteil oder wenigstens ein Seitenteil überträgt.

Vorteilhaft weist die Dichtungseinrichtung ein elastisches Dichtmittel auf. So wäre es möglich, dass es sich bei der Kopplungseinrichtung beispielsweise um eine Stange oder ein Gestänge handelt und an diesem Gestänge ein Dichtmittel wie beispielsweise ein Faltenbalg angeordnet ist. Für die Verwendung eines derartigen Faltenbalgs kann trotz einer Bewegung der Kopplungseinrichtung eine dichte Grenze des Reinraums aufrecht erhalten werden. Vorteilhaft folgt wenigstens ein Abschnitt des Dichtmittels hinsichtlich seiner Bewegung der Kopplungseinrichtung.

Vorteilhaft bewegt die Antriebseinrichtung das Bodenteil oder wenigstens ein Seitenteil entlang eines endlichen Pfades, d. h. entlang eines Bewegungspfades, der wenigstens einen Endpunkt und vorteilhaft zwei Endpunkte aufweist (im Gegensatz etwa zu einer Bewegung entlang einer kreisförmigen oder elliptischen Bahn).

Vorteilhaft ist eine erste Antriebseinrichtung zum Bewegen des Bodenteils und eine zweite Antriebseinrichtung zum Bewegen des Seitenteils vorgesehen und beide Antriebseinrichtungen sind außerhalb des Reinraums angeordnet.

Bei einer weiteren vorteilhaften Ausführungsform weist die Dichteinrichtung eine Gassperre auf. In diesem Falle kann in einem abzudichtenden Bereich ein Gas, wie beispielsweise Wasserdampf eingeführt werden und dieser Wasserdampf eine Gasbarriere ausbilden.

Weiterhin wäre es jedoch auch möglich, dass eine Abdichtung durch Mittel wie beispielsweise sogenannte Wasserschlösser erfolgt. Dabei kann in einem Wasserbehälter ein bewegliches Element geführt werden, so dass eine Hubbewegung möglich ist, ohne dass hierbei eine Grenze zwischen einem sterilen und einem nicht sterilen Raum durch ein Gas überschritten werden kann.

Bei einer weiteren vorteilhaften Ausführungsform weist die Vorrichtung Zuführeinrichtungen zum Zuführen einer Temperierflüssigkeit für die Blasformen auf und Anschlüsse für die Zuführeinrichtungen sind innerhalb des Sterilraums bzw. Reinraums angeordnet. Weiterhin wäre es jedoch auch möglich, dass eine Reinraumgrenze so vorgesehen ist, dass die Zuführeinrichtungen zum Zuführen der Temperierflüssigkeit und die Anschlüsse für die Zuführeinrichtungen alle im Bodenteil stets außerhalb des Reinraums angeordnet sind. Vorteilhaft ist das Bodenteil und besonders bevorzugt sind auch die Seitenteile kühlwasserbeständig ausgeführt.

Vorteilhaft weist die Vorrichtung eine Sterilisationseinrichtung auf, welche vor den eigentlichen Blasstationen angeordnet ist und welche die einzelnen Kunststoffvorformlinge sterilisiert.

Weiterhin wird vorgeschlagen, ein Blasrad der Blasmaschine d. h. den Bereich, in dem aus dem Kunststoffvorformling ein Kunststoffbehältnis entsteht zu überarbeiten. Dabei wird ein Bereich um den eigentlichen formgebenden Bereich der Maschine, d. h. den Formträger mit der Blasform herum in einer Art gekapselt, dass dieser Bereich sterilisiert werden kann. Dabei wird vorteilhaft ein Sterilraum definiert und alle Medien und Bauteile, die die Grenzen dieses Sterilraums überqueren, werden so gestaltet, dass ein einmal bei Produktionsbeginn sterilisierter Raum auch steril bleibt. Durch die erfindungsgemäße Vorgehensweise ist es auch möglich, zu verhindern, dass Fett und Umgebungsluft in den Sterilraum eindringt.

In dem Bereich des Bodenteils ist es dabei erforderlich, eine Hubbewegung auszuführen, um ein geblasenes Behältnis formen zu können. Diese Hubbewegung kann dabei durch eine Kurve angesteuert werden, welche auch im Stand der Technik gefettet werden muss. Daher ist es vorteilhaft, die besagte Kurve außerhalb des Reinraums anzuordnen. Genauer gesagt ist es möglich, dass die besagte Kurve unterhalb des Formträgers und daher auch unterhalb des Reinraums verläuft.

Alternativ ist es auch möglich, das Behältnis auf dem Kopf stehend zu blasen, indem sich die besagte Kurve für das Bodenteil oberhalb des Formträgers und daher auch oberhalb des Reinraums befindet.

Es wären jedoch auch andere Antriebseinrichtungen, wie beispielsweise Servomotoren, hydraulische oder pneumatische Hubzylinder oder dergleichen als Antriebseinrichtung denkbar. Auch könnten Linearmotoren zum Einsatz kommen.

Die oben erwähnte Sterilraumgrenze zwischen dem Reinraum und der Umgebung wird vorteilhaft so gelegt, dass eine Antriebseinrichtung, beispielsweise die Kurve und Kurvenrolle, außerhalb des Sterilraums bleiben. Vorteilhaft wird der Reinraum nach unten hin durch eine durchbrochene und vorteilhaft solide Abgrenzung begrenzt.

Dieser Durchbruch dient, wie oben erwähnt, wenigstens zur Durchführung der Bodeneinheit der Blasstation, und ggfs. auch zur Durchführung der oben erwähnten Zu- und Abführungen der Temperiermedien für die Bodenform bzw. das Bodenteil.

Dabei kann zwischen dem Bodenteil und dem Durchbruch ein Faltenbalg vorgesehen sein, der einen Abschluss des Reinraums zum Bereich der Führungskurve hin gewährleistet.

Weiterhin wäre es möglich, an dem Durchbruch den besagten Faltenbalg durch eine geeignete Klemmvorrichtung z. B. in Art einer Schlauchschelle zu fixieren. Im Fall eines Produkt- oder Formenwechsels wäre es möglich, diese Seite lösbar auszuführen.

Dabei wäre es möglich, dass der besagte Faltenbalg in das Innere des Reinraums ragt, es wäre jedoch auch möglich, dass sich der Faltenbalg bezüglich des Reinraums nach Außen erstreckt.

Bei einer weiteren vorteilhaften Ausführungsform weist die Vorrichtung eine Beaufschlagungseinrichtung auf, welche die Kunststoffvorformlinge mit einem gasförmigen Medium beaufschlagt und diese Beaufschlagungseinrichtung ist innerhalb des Sterilraums angeordnet und weiterhin ist eine Antriebseinrichtung zum Bewegen der Beaufschlagungseinrichtung vorgesehen.

Bei dieser Beaufschlagungseinrichtung kann es sich beispielsweise um eine Blasdüse handeln, welche wie im Stand der Technik bekannt, zur Durchführung des Blasvorgangs an einer Mündung des Behältnisses oder auch an einer Blasform angelegt wird, um den Kunststoffvorformling insbesondere mit Druckluft zu beaufschlagen. Vorteilhaft ist die Antriebseinrichtung zum Bewegen der Beaufschlagungseinrichtung außerhalb des Sterilraums vorgesehen. Durch diese Vorgehensweise ist eine weitere Reduktion des Reinraumvolumens denkbar. Vorteilhaft bewegt sich eine Wandung, welche eine Grenze des Reinraums bildet mit den einzelnen Blasstationen mit.

Vorzugsweise sind in einer zu der Transportrichtung (der Behältnisse) senkrecht stehenden Richtung bestimmte Teile der Transporteinrichtung innerhalb des Reinraums angeordnet und andere Teile außerhalb.

Vorzugsweise handelt es sich bei der Transporteinrichtung um ein Transportrad, welches sich um eine vorgegebene Achse dreht, wobei wenigstens die Achse bzw. eine Welle der Transporteinrichtung außerhalb des Reinraums angeordnet ist. Damit wird erreicht, dass der Reinraum möglichst klein gehalten wird und damit auch das Innenvolumen des Reinraums gering gehalten werden kann. Weiterhin wird auf diese Weise auch erreicht, dass eine möglichst große Anzahl an Maschinenteilen, welche nicht unmittelbar mit den Blasstationen in Kontakt sind, außerhalb des Reinraums geführt werden können und auch auf diese Weise werden Kontaminationen gering gehalten.

Vorzugsweise weist der Reinraum wenigstens abschnittsweise ein ringförmiges Profil auf bzw. ein torusartiges Profil, wobei hier jedoch der Querschnitt dieses torusartigen Profils bevorzugt von einer Kreisform abweicht. Dies bedeutet, dass die Blasstationen durch die Transporteinrichtung auf einer im Wesentlichen kreisförmigen Bahn geführt werden.

Bei einer weiteren vorteilhaften Ausführungsform ist an jeder Blasstation eine Reckstange zum Recken der Kunststoffvorformlinge angeordnet und diese Reckstange ragt wenigstens zeitweise und abschnittsweise aus dem Reinraum heraus. Die Reckstange wird bekanntlich verwendet, um die Kunststoffvorformlinge im Rahmen des Herstellungsprozesses zu dehnen. Prinzipiell wäre es auch möglich, die gesamte Reckstange stets im Inneren des Reinraums zu führen. Zu diesem Zwecke müsste jedoch der Reinraum erheblich in seinem Volumen vergrößert werden. In der bevorzugten Ausführungsform wird daher vorgeschlagen, dass die Reckstange durch eine Öffnung in dem Reinraum nach außen ragt. Um gleichzeitig Kontaminationen dieser Reckstange zu verhindern, ist besonders bevorzugt ein Faltenbalg vorgesehen, in dessen Inneren die Reckstange verläuft, so dass die Reckstange selbst nicht mit der Außenwelt in Kontakt kommt. Innerhalb des Faltenbalgs herrschen damit auch sterile Bedingungen.

Vorzugsweise ist der Reinraum von mehreren Wandungen begrenzt und wenigstens eine dieser Wandungen ist gegenüber einer weiteren Wandung bewegbar und insbesondere drehbar angeordnet.

Vorzugsweise ist eine radial außen angeordnete Wandung des Reinraum stationär angeordnet. Damit kann eine Wandung mit einem insbesondere zylinderförmigen Außenprofil vorgesehen sein, welche den Reinraum begrenzt. Vom Inneren dieser Wandung ist eine weitere Wandung vorgesehen, die den Reinraum zu der anderen Seite hin begrenzt und die drehbar angeordnet ist. Vorzugsweise wird diese innen angeordnete Wandung mit den einzelnen Blasstationen gedreht. Vorzugsweise liegen sich die erwähnte drehbare Wand und die stationär angeordnete Wand gegenüber. Weiterhin wird der Reinraum von einer Wandung in Form eines Deckels begrenzt, wobei dieser Deckel vorzugsweise einteilig mit der drehbaren Wand ausgebildet ist.

Vorzugsweise ist zwischen wenigstens zwei Wandungen bzw. einer Wandung und einem Deckel eine Dichtungseinrichtung angeordnet. Diese Dichtungseinrichtung dichtet bevorzugt gegenüber einander bewegliche Teile gegeneinander ab. So wäre es beispielsweise möglich, zwischen einer Wandung und einem Deckel ein so genanntes Wasserschloss vorzusehen, bei dem ein hier bevorzugt ringförmiger Wasserkanal vorgesehen ist, in dem ein Abschnitt des gegenüber diesem Wasserkanal beweglichen Teils geführt wird.

Bei einer weiteren vorteilhaften Ausführungsform weist die Vorrichtung eine Zuführeinrichtung auf, um der Transporteinrichtung die Kunststoffvorformlinge zu übergeben und diese Zuführeinrichtung ist innerhalb des Reinraums angeordnet. Damit weist hier bevorzugt der Reinraum eine Ausbuchtung bzw. eine Abweichung von dem ansonsten kreisförmigen Querschnitt auf, und in dieser Ausbuchtung ist entsprechend die Zuführeinrichtung wie beispielsweise ein Transportstern für die Vorformlinge angeordnet. Auf diese Weise kann eine lückenlose Übergabe der Behältnisse von der Zuführeinrichtung an die Transporteinrichtung innerhalb eines Sterilraums erfolgen.

Bei einer weiteren vorteilhaften Ausführungsform weist die Vorrichtung auch eine Abführeinrichtung auf, um von der Transporteinrichtung die ausgebildeten Kunststoffbehältnisse zu übernehmen und diese Abführeinrichtung ist ebenfalls innerhalb des Reinraums angeordnet. Auf diese Weise kann auch beim Abtransport der Behältnisse ein Reinraum gewahrt werden. Damit ist es möglich, dass ein Einbringen von Vorformlingen aus vorgelagerten Aggregaten in den Isolator bzw. Reinraum sowie ein Ausbringen der Flaschen zu einem nächsten Aggregat unter Reinraumbedingungen möglich ist. Der Isolator bzw. Reinraum kann mit Reinigungs- und Sterilisationsmedien beaufschlagt werden.

Bei einer weiteren vorteilhaften Ausführungsform ist innerhalb des Reinraums ein Sterilgas vorgesehen und dieses Sterilgas steht unter einem Druck, der höher ist als ein Druck au β erhalb des Reinraums. Damit kann der Reinraum optional durch das Einbringen von sterilisierter Luft auf einem höheren Druckniveau als die Umgebung gehalten werden, wodurch das Eindringen von Mikroorganismen verhindert werden kann. Weiterhin besteht die Möglichkeit, dem Reinraum kontinuierlich einen antimikrobiellen Wirkstoff zuzuführen und auf diese Weise ein hygienisches Umfeld aufrecht zu erhalten.

Durch einen räumlich begrenzten Reinraum in der Blasvorrichtung ist es möglich, vorher entkeimte Vorformlinge ohne Rekontamination sowohl außen als auch innen während des Streckblasvorgangs zum Füller zu transportieren. Des Weiteren ist der Reinraum im Vergleich zur gesamten Umformungsvorrichtung einfacher auf einem keimarmen Level zu halten.

Die vorliegende Erfindung ist weiterhin auf eine Anlage zum Herstellen von Kunststoffbehältnissen gerichtet, welche eine Vorrichtung zum Umformen von Kunststoffbehältnissen der oben beschriebenen Art aufweist, sowie eine Heizeinrichtung, wobei diese Heizeinrichtung in einer Transportrichtung der Kunststoffvorformlinge stromaufwärts bezüglich der oben erwähnten Vorrichtung angeordnet ist. Diese Heizeinrichtung dient dazu, um die Vorformlinge zu erwärmen, damit diese anschließend in einem Blasvorgang zu Behältnissen expandiert werden können. Stromabwärts bzw. nach der Umformungsvorrichtung ist eine Fülleinrichtung vorgesehen, welche die Behältnisse mit einem Getränk, insbesondere mit einem aseptischen Produkt, befüllt. Auch diese Fülleinrichtung ist dabei in einem Reinraum angeordnet. Weiterhin erstreckt sich bevorzugt der Reinraum bis in den Bereich einer Verschließeinrichtung, welche die Behältnisse mit einem Verschluss verschließt.

Weiterhin weist die Anlage bevorzugt eine Sterilisationseinrichtung auf, welche wenigstens einen Bereich der Kunststoffvorformlinge vor Erreichen der Vorrichtung sterilisiert. Dabei kann diese Sterilisation mit einem gasförmigen Medium, wie insbesondere Wasserstoffperoxid, durchgeführt werden. Es wäre jedoch auch möglich, dass die Sterilisation unter Verwendung von Strahlung, wie beispielsweise Elektronenstrahlen und/oder UV-Licht bewirkt wird. Dabei ist bevorzugt eine Sterilisationseinrichtung vorgesehen, welche insbesondere auch die Innenoberfläche der Kunststoffvorformlinge sterilisiert. Daneben kann jedoch auch die Au-βenoberfläche der Kunststoffvorformlinge sterilisiert werden.

Bei einer weiteren vorteilhaften Ausführungsform weist die Anlage einen weiteren Reinraum auf, der in der Transporteinrichtung der Kunststoffvorformlinge vor der oben erwähnten Vorrichtung angeordnet ist. Vorzugsweise geht dieser weitere Reinraum in den Reinraum der Umformungseinrichtung über. Auf diese Weise ist es möglich, die Kunststoffbehältnisse ausgehend von deren Sterilisation kontinuierlich bis zum Verschließen zu fördern und gleichwohl die hierzu nötigen Reinräume relativ gering zu halten. Damit ist bevorzugt der Reinraum als sich von der Sterilisationseinrichtung bis zu der Verschließeinrichtung erstreckender Kanal vorgesehen, der besonders bevorzugt jeweils an die entsprechenden Blasstationen oder Halteeinrichtungen wie Greifelemente für die Vorformlinge oder Kunststoffbehältnisse angepasst ist.

Bei einem Verfahren zum Umformen von Kunststoffvorformlingen zu Kunststoffbehältnissen werden die Kunststoffvorformlinge mittels einer Transporteinrichtung, an der eine Vielzahl von Blasstationen angeordnet ist, transportiert und während dieses Transports zu Kunststoffbehältnissen umgeformt. Dabei werden die Blasstationen wenigstens abschnittsweise und bevorzugt vollständig durch einen Reinraum transportiert.

Dabei weisen die Blasstationen jeweils Blasformen auf, wobei die Blasformen zwei Seitenteile und ein Bodenteil aufweisen. Die Seitenteile und das Bodenteil bilden gemeinsam einen Hohlraum aus, innerhalb dessen der Kunststoffvorformling zum Kunststoffbehältnis umgeformt wird. Die den Hohlraum begrenzenden Bereiche der Seitenteile und des Bodenteils und bevorzugt die gesamten Seitenteile und das Bodenteil sind dabei stets innerhalb des Reinraums angeordnet. Erfindungsgemäß werden wenigstens die Seitenteile oder das Bodenteil in einer Antriebseinrichtung bewegt, die sich wenigstens teilweise und bevorzugt vollständig außerhalb des Sterilraums befindet und die eine Öffnungs- oder Schließbewegung der Blasform bewirkt.

Bevorzugt wird auch wenigstens ein Bereich der Transporteinrichtung außerhalb des Reinraums bewegt. Bei einem weiteren bevorzugten Verfahren werden die Blasstationen auf einer kreisförmigen Bahn bewegt und besonders bevorzugt ständig innerhalb des Reinraums bewegt.

Weitere Vorteile und Ausführungsformen ergeben sich aus den beigefügten Zeichnungen:
Darin zeigen:
   - Fig. 1: eine schematische Darstellung einer Anlage zum Herstellen von Kunststoffbehältnissen nach dem Stand der Technik;
   - Fig. 2: eine Ansicht eines Reinraums im Bereich einer Blasstation, nach dem Stand der Technik;
   - Fig. 3a-3f: sechs schematische Darstellungen einer erfindungsgemäßen Vorrichtung;
   - Fig. 4: eine Seitenansicht einer erfindungsgemäßen Vorrichtung;
   - Fig. 5a-5c: Darstellungen einer Formträgerbetätigung;
   - Fig. 6a-6d: Eine Formträgerbetätigung in einer weiteren Ausführungsform;
   - Fig. 7a-7c: drei schematische Darstellungen einer erfindungsgemäßen Vorrichtung; und
   - Fig. 8a-8d: Darstellungen eines Antriebs für das Bodenteil.

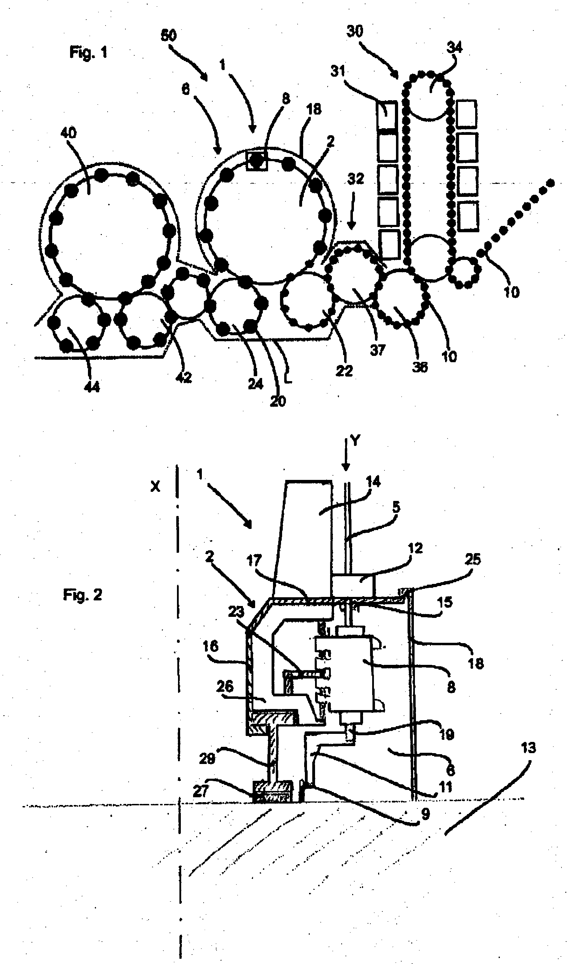

Figur 1 zeigt eine schematische Darstellung einer Anlage nach dem Stand der Technik zum Herstellen von Kunststoffbehältnissen. Diese Anlage 50 weist eine Heizeinrichtung 30 auf, in der Kunststoffvorformlinge 10 erwärmt werden. Dabei werden diese Kunststoffvorformlinge 10 mittels einer Transporteinrichtung 34, wie hier einer umlaufenden Kette, durch diese Heizeinrichtung 30 geführt und dabei mit einer Vielzahl von Heizelementen 31 erwärmt. An diese Heizeinrichtung 30 schließt sich eine Übergabeeinheit 36 an, welche die Vorformlinge 10 an eine Sterilisationseinrichtung 32 übergibt. Diese Sterilisationseinrichtung 32 weist dabei hier ebenfalls ein Transportrad 37 auf und an diesem Transportrad 37 oder auch stationär können Sterilisationselemente angeordnet sein. In diesem Bereich ist beispielsweise eine Sterilisation durch Wasserstoffperoxidgas oder auch, wie oben erwähnt, durch elektromagnetische Strahlung möglich. Insbesondere wird in diesem Bereich eine Innensterilisation der Vorformlinge durchgeführt.

Das Bezugszeichen 6 bezeichnet in seiner Gesamtheit einen Reinraum, dessen Außenbegrenzungen hier durch die punktierte Linie L angedeutet sind. Man erkennt, dass dieser Reinraum 6 in dem Bereich der Sterilisationseinheit 32 beginnt. In diesem Bereich können Schleuseneinrichtungen vorgesehen sein, um die Kunststoffvorformlinge in den Reinraum 6 einzuführen, ohne dass dabei zu viel Gas innerhalb des Reinraums verloren geht.

Der Reinraum ist, wie durch die gestrichelte Linie L angedeutet, an die Außengestalt der einzelnen Anlagenkomponenten angepasst. Auf diese Weise kann das Volumen des Reinraums reduziert werden.

Das Bezugszeichen 1 bezeichnet in ihrer Gesamtheit eine Umformungsvorrichtung, bei der an einem Transportrad 2 eine Vielzahl von Blasstationen 8 angeordnet ist, wobei hier lediglich einer dieser Blasstationen 8 dargestellt ist. Mit diesen Blasstationen 8 werden die Kunststoffvorformlinge 10 zu Behältnissen 20 expandiert. Obwohl hier nicht detailliert gezeigt, befindet sich nicht der gesamte Bereich des Transporteinrichtung 2 innerhalb des Reinraums 6, sondern der Reinraum 6 bzw. Isolator ist gewissermaßen als Mini-Isolator innerhalb der gesamten Vorrichtung realisiert. So wäre es möglich, dass der Reinraum zumindest im Bereich der Umformungsvorrichtung 1 kanalartig ausgeführt ist.

Das Bezugszeichen 22 bezieht sich auf eine Zuführeinrichtung, welche die Vorformlinge an die Umformungseinrichtung 1 übergibt und das Bezugszeichen 24 auf eine Abführeinrichtung, welche die hergestellten Kunststoffbehältnisse 20 von der Umformungsvorrichtung 1 abführt. Man erkennt, dass der Reinraum 6 in dem Bereich der Zuführeinrichtung 22 und der Abführeinrichtung 24 an jeweils Ausnehmungen aufweist, welche diese Einrichtungen 22, 24 aufnehmen. Auf diese Weise kann in besonders vorteilhafter Weise eine Übergabe der Kunststoffvorformlinge 10 an die Umformungsvorrichtung 1 bzw. eine Übernahme der Kunststoffbehältnisse 20 von der Umformungsvorrichtung 1 erreicht werden.

Mit einer Übergabeeinheit 42 werden die expandierten Kunststoffbehältnisse an eine Befüllungseinrichtung 40 übergeben und von dieser Befüllungseinrichtung 40 anschließend über eine weitere Transporteinheit 44 abgeführt. Dabei befindet sich auch die Befüllungseinrichtung 40 innerhalb des besagten Reinraums 6. Auch im Falle der Befüllungseinrichtung wäre es möglich, dass nicht die gesamte Befüllungseinrichtung 40 mit beispielsweise einem Reservoir für ein Getränk vollständig innerhalb des Reinraums 6 angeordnet sind, sondern auch hier lediglich diejenigen Bereiche, in denen tatsächlich die Behältnisse geführt werden. Insoweit könnte auch die Befüllungseinrichtung in ähnlicher Weise aufgebaut sein wie die Vorrichtung 1 zum Umformen von Kunststoffvorformlingen 10.

Wie erwähnt, ist der Reinraum 6 im Bereich der Vorrichtung 1 auf einen geringst möglichen Bereich reduziert, nämlich im Wesentlichen auf die Blasstationen 8 selbst. Durch diese kleinbauende Gestaltung des Reinraums 6 ist es leichter und schneller möglich, einen Reinraum überhaupt herzustellen und auch die Sterilhaltung in der Betriebsphase ist weniger aufwändig. Auch wird weniger Sterilluft benötigt, was zu kleineren Filteranlagen führt und auch die Gefahr von unkontrollierter Wirbelbildung wird reduziert.

Figur 2 zeigt eine Detaildarstellung der Vorrichtung 1 im Bereich einer Blasstation 8. Eine Vielzahl derartiger Blasstationen 8 wird mit einer Transporteinrichtung 2 drehend um eine Achse X bewegt. Die Blasstation 8 ist, wie in Figur 2 ersichtlich, innerhalb des Reinraums 6, der hier kanalartig ausgebildet ist, geführt. Dieser Reinraum 6 wird abgeschlossen durch eine bewegliche Seitenwand 16 und einen einteilig mit dieser Seitenwand 16 ausgebildeten Deckel 17. Diese Seitenwand 16 und der Deckel 17 drehen dabei mit der Blasstation 8 mit.

Das Bezugszeichen 18 bezieht sich auf eine weitere Wandung, welche den Reinraum 16 begrenzt. Diese Wandung 18 ist hier eine außen liegende Wandung, welche stationär angeordnet ist. Zwischen dem Deckel 17 und der Wandung 18 ist eine Dichtungseinrichtung 25 vorgesehen, welche die gegeneinander beweglichen Elemente 17 und 18 gegeneinander abdichtet, beispielsweise, wie oben erwähnt, unter Verwendung eines Wasserschlosses. Der untere Bereich der Wandung 18 ist fest und abdichtend an einem Boden 13 angeordnet. Innerhalb des Reinraums 6 und hier unmittelbar an der Wandung 16 anliegend ist ein Träger 26 vorgesehen, der sich ebenfalls drehend bewegt und an dem wiederum eine Halteeinrichtung 23 vorgesehen ist, welche die Blasstation 8 hält.

Das Bezugszeichen 11 bezieht sich auf eine Folgeeinrichtung, welche von einer Führungskurve 9 betätigt werden kann, um die Blasstation auf ihrem Weg durch den Reinraum 6 zu öffnen und zu schließen, um insbesondere den Kunststoffvorformling in die Blasstation einzulegen und um ihn auch wieder zu entnehmen. Dabei ist eine Führungskurve 9 auch innerhalb des Reinraums 6 angeordnet. Es wäre jedoch beispielsweise auch möglich, etwa bereits einen Abschnitt 19 unterhalb der einzelnen Blasstationen 8 aus dem Reinraum 6 herauszuführen.

Die Transporteinrichtung 2 kann noch weitere Elemente aufweisen, welche oberhalb des Reinraums 6 angeordnet sind.

Der Träger 26 ist dabei fest auf einem Haltekörper 29 angeordnet und dieser Haltekörper ist wiederum beweglich gegenüber dem Boden 13. Dabei bezieht sich das Bezugszeichen 27 auf eine weitere Dichtungseinrichtung, welche auch in diesem Bereich eine Abdichtung der gegeneinander beweglichen Bereiche 13 und 29 bewirkt.

Das Bezugszeichen 5 bezieht sich auf eine Reckstange, welche gegenüber der Blasstation beweglich ist, um die Kunststoffvorformlinge 10 in ihrer Längsrichtung zu recken. Dabei ist auf dem Deckel 17 hier ein Schlitten 12 angeordnet, demgegenüber die Reckstange in der Richtung Y beweglich ist. Das Bezugszeichen 14 bezieht sich auf eine weitere Halterung für diesen Schlitten 12 der Reckstange 5.

Man erkennt, dass bestimmte Bereiche der Reckstange während des Blasvorgangs sowohl außerhalb des Reinraums 6 als auch innerhalb des Reinraums sind. Zu diesem Zweck ist es möglich, außerhalb des Reinraums 6 bzw. oberhalb des Schlittens 12 eine Schutzeinrichtung wie einen Faltenbalg vorzusehen, der die Reckstange 5 umgibt, so dass kein Bereich der Reckstange 5 unmittelbar mit der Außenumgebung in Berührung kommt.

Die oben erwähnte Heizeinrichtung zum Erwärmen der Kunststoffvorformlinge ist bevorzugt ebenfalls aseptisch ausgeführt. Dies bedeutet, dass die Kunststoffvorformlinge bereits im Bereich der Heizeinrichtung 30, anders als in Fig. 1 gezeigt, durch einen Reinraum geführt werden können und sich dieser Reinraum beispielsweise durchgehend über die Blasmaschine bis zu dem Füller erstreckt. Dabei ist es möglich, dass die vollständige Heizeinrichtung 30 innerhalb eines Sterilraums angeordnet ist, es wäre jedoch auch möglich, dass auch hier insbesondere der Bereich, in dem die Kunststoffvorformlinge transportiert werden, gegenüber der Umgebung als Sterilraum gekapselt ist. So wäre es beispielsweise möglich, dass die Kunststoffvorformlinge mittels Dornen transportiert werden, die in ihre Mündung eingreifen und die Dornen dabei durch eine Wandung in einen Reinraum hineinragen. Dieser Reinraum könnte ebenfalls mit einem Überdruck beaufschlagt werden, so dass keine Umgebungsluft in diesen Reinraum eindringen kann.

Die Heizeinrichtung könnte dabei als Infrarotheizeinrichtung ausgestaltet sein, wie in Fig. 1 dargestellt. Vorteilhaft wird jedoch hier als Heizeinrichtung eine Mikrowellenheizeinrichtung verwendet. Derartige Mikrowellenheizeinrichtungen zum Erwärmen von Kunststoffvorformlingen sind aus dem Stand der Technik an sich bekannt. Dabei könnte eine Vielzahl von Mikrowellenheizstationen beispielsweise an einem Trägerrad angeordnet sein. Über Schleusen könnten die Kunststoffvorformlinge diesen einzelnen Heizstationen zugeführt werden. Aufgrund der Ausführung mit einzelnen Heizstationen eignet sich eine mikrowellenbasierte Heizeinrichtung in besonderer Weise für die Kombination mit Sterilräumen.

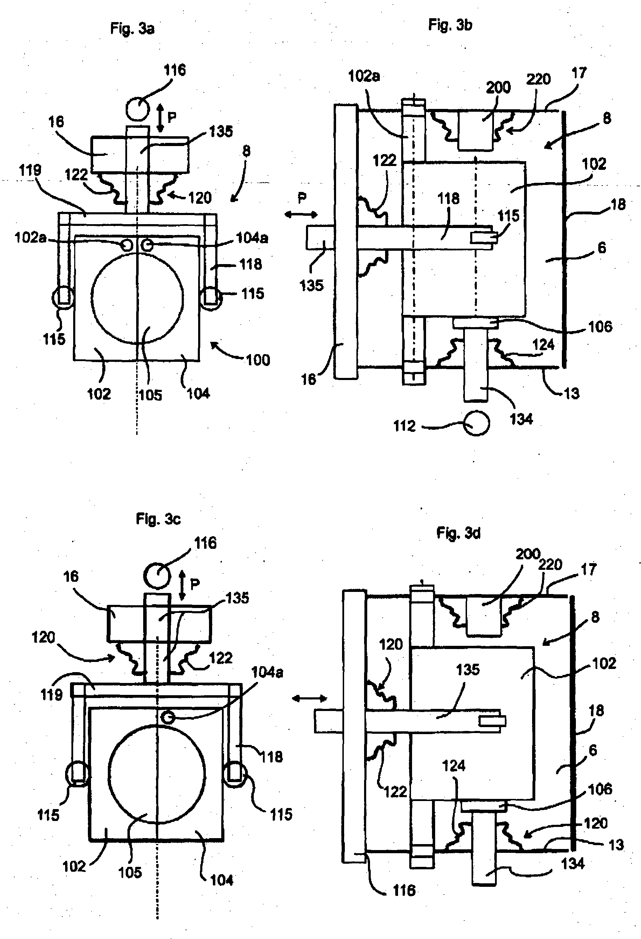

Fig. 3a zeigt eine Draufsicht einer erfindungsgemäßen Blasstation 8. Diese Blasstation weist dabei eine (stark vereinfacht und ohne Träger dargestellte) Blasform 100 mit einem ersten Seitenteil 102, sowie einem zweiten Seitenteil 104 auf, welche hier jeweils um Schwenkachsen 102a und 104a schwenken. In ihrem Inneren bilden die beiden Seitenteile einen Hohlraum 105 aus, in dem Kunststoffvorformlinge zu Kunststoffbehältnissen expandiert werden können. An den beiden Seitenteilen 102 und 104 sind dabei jeweils über Gelenke 115 Arme 118 angeordnet, wobei diese Arme wiederum an einem Hauptarm 119 vorgesehen sind. Das Bezugszeichen 116 bezieht sich auf eine Antriebseinrichtung, welche eine als Kopplungseinrichtung wirkende Stange 135 in der Richtung des Doppelpfeils P bewegt, welche damit auch die Arme 118 und 119 bewegt. Durch die Bewegung dieser Stange 135 können die beiden Seitenteile 102 und 104 auseinander bzw. zusammengeschwenkt werden.

Das Bezugszeichen 120 kennzeichnet eine Dichtungseinrichtung mit einem Faltenbalg 122, der einerseits an der Kopplungseinrichtung 135 und andererseits an einer Begrenzungswand 16 angeordnet ist. Diese Begrenzungswand 16 trennt dabei den Reinraum, in dem die Blasstation 8 angeordnet ist von dem nichtsterilen Raum, in dem die Antriebseinrichtung 116 vorgesehen ist, ab. Damit ist hier eine Dichtungseinrichtung 120 vorgesehen, die einen Öffnungsmechanismus, der der Blasform bzw. dem Formenträger zugeordnet ist, von dem Transportweg der Behältnisse oder Vorformlinge abschirmt.

Der Faltenbalg 122 besteht aus einem Material, welches aus einer Gruppe von Materialien ausgewählt ist, welche Kunststoffe, EPDM, Kautschuk, Elastomere, Gummi oder Stahl enthält. Der Faltenbalg 122 kann dabei als Membranbalg oder Wellbalg oder als Kombination hieraus ausgebildet sein.

Fig. 3b zeigt eine Seitendarstellung der in Fig. 3a gezeigten Vorrichtung. Bei der in Fig. 3b gezeigten Darstellung erkennt man zusätzlich eine Antriebseinrichtung 112, welche eine Kopplungseinrichtung 134 bewegt, wobei an der Kopplungseinrichtung 134 wiederum ein Bodenteil 106 angeordnet ist, welches ebenfalls zum Abschließen des Hohlraums 105 dient. Das Bezugszeichen 13 kennzeichnet eine untere Wandung des in seiner Gesamtheit mit 6 bezeichneten Reinraums, durch welche sich die Kopplungseinrichtung 134 hindurch erstreckt. Das Bezugszeichen 124 kennzeichnet wieder eine Dichtungseinrichtung wie einen Faltenbalg, der diese Bewegung der Kopplungseinrichtung 134 gegenüber der Wandung 13 abdichtet.

Das Bezugszeichen 18 kennzeichnet wieder eine radial außenliegende Wandung, welche hier stehend angeordnet ist. Die Wandungen 13 und 17, sowie auch die Wandung 16 drehen sich mit den einzelnen Blasstationen 8 mit. Man erkennt, dass der Reinraum 6 relativ eng um die Blasstationen herum gebaut ist, sodass ein sehr geringes Volumen steril gehalten werden muss. Insgesamt sind hier drei Dichtungseinrichtungen 122, 124, 220 vorgesehen, genauer auch eine weitere Dichtungseinrichtung 220, welche zum Abdichten der Bewegung einer Blasdüse 200 dient. Eine weitere Kopplungseinrichtung 135 koppelt die Seitenteile 102, 104 an die Antriebseinrichtung 110. Das Bezugszeichen 102a kennzeichnet wiederum die Schwenkachse zum Schwenken des Seitenteils 102.

Fig. 3c und 3d zeigen eine weitere Ausführungsform einer erfindungsgemäßen Vorrichtung. Hier wird lediglich das Seitenteil 104 um seine Schwenkachse 104a geschwenkt, und das Seitenteil 102 unverschwenkt gehalten. Im Übrigen kann auch hier wieder ein Arm vorgesehen sein, der von einer Antriebseinrichtung 116 entlang eines Doppelpfeils P bewegt wird, um das Seitenteil 104 gegenüber dem stationär vorgesehenen Seitenteil 102 zu öffnen. Weiterhin können auch Verriegelungseinrichtungen vorgesehen sein, welche die Seitenteile 102, 104 in einem geschlossenen Zustand miteinander verriegeln. Auch die Antriebseinrichtung für einen derartigen Verriegelungsmechanismus kann außerhalb des Reinraums 6 angeordnet sein.

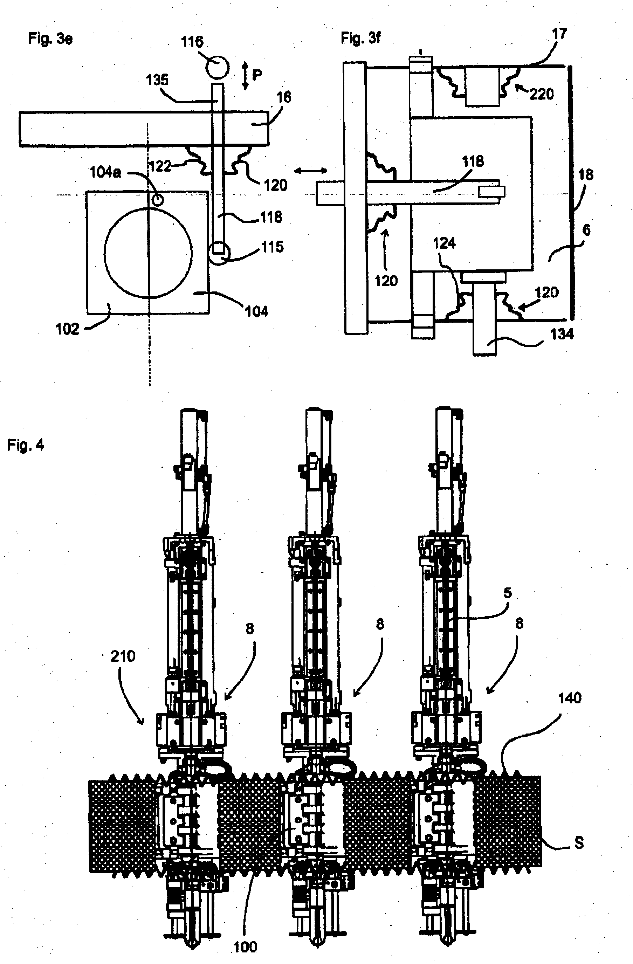

Bei der in den Figuren 3e und 3f gezeigten Ausführungsform ist nur das Seitenteil 104 bezüglich der Schwenkachse schwenkbar, d.h. zum Öffnen und Schließen der Blasform wird nur dieses Seitenteil 104 geschwenkt, während das andere Seitenteil 102 unverschwenkt bleibt. Daher ist hier auch nur ein Arm 118 vorgesehen, der an dem Seitenteil 104 angelenkt ist. Dabei ist es denkbar, dass der Arm hier mit einem größeren Hub bewegt wird als die beiden Arme 118 bei den in den Fig. 3a bis 3d gezeigten Ausführungsformen.

Fig. 4 zeigt eine schematische Darstellung mehrerer Blasstationen 8. Die schraffierte Fläche bezieht sich dabei auf die Sterilraumgrenze S zwischen dem Reinraum und dessen Umgebung. Die obere Sterilraumgrenze 140 kann sich in einer bevorzugten Ausführungsform auch auf Höhe der Ventileinrichtungen 210 befinden.

Das Bezugszeichen 5 kennzeichnet eine Reckstange, welche hier teilweise außerhalb des Reinraums angeordnet ist, jedoch in dessen Inneres einfahren kann. Auch sind wieder die einzelnen Blasformen bzw. Blasformträger 100 dargestellt, die wie oben erwähnt zum Expandieren der Kunststoffvorformlinge dienen. Damit ist auch hier wieder ein Reinraum um die Blasstation mit den Blasformen vorhanden. Weiterhin ist auch hier ein drehendes Blasrad mit einer Vielzahl von Kavitäten vorgesehen, in denen die Vorformlinge zu Behältnissen expandiert werden.

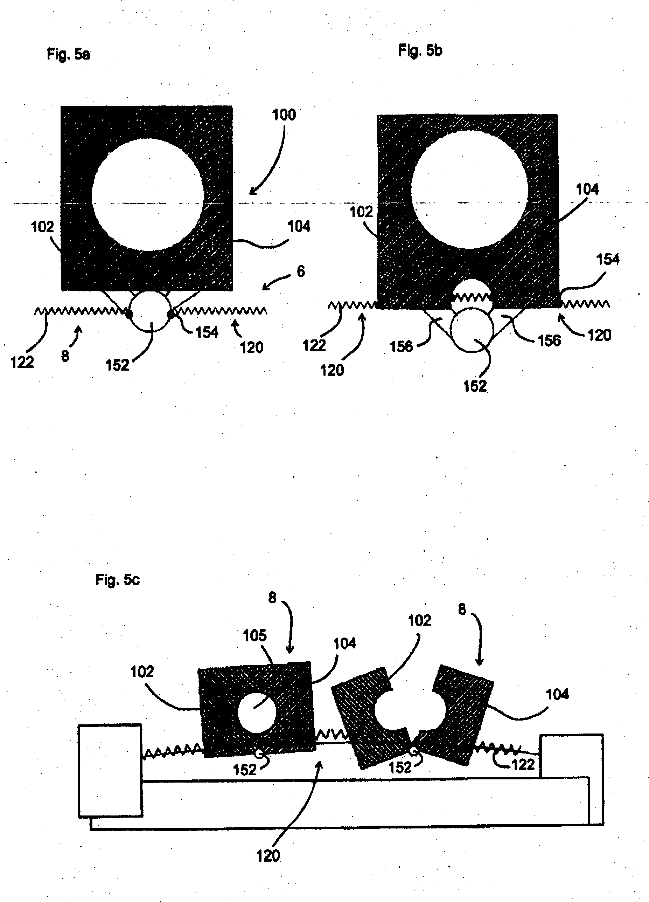

Fig. 5a zeigt eine weitere Ausführungsform einer erfindungsgemäßen Blasstation 8. Hier sind die beiden Seitenteile 102 und 104 mittels einer Schwenkachse 152 schwenkbar vorgesehen. Die Dichtungseinrichtung 120, die hier ebenfalls elastisch ausgebildet ist, verläuft hier durch diese besagte Drehachse 152. Dies bedeutet, dass die Achse teilweise innerhalb des Reinraums 6 und teilweise außerhalb des Reinraums 6 liegt. Die Drehachse 102 kann zwei ineinander drehbare Wellen aufweisen, wobei an eine Welle das Seitenteil 102 und an die andere Welle das Seitenteil 104 gekoppelt ist. Diese beiden Wellen können gegeneinander gedreht werden, um auf diese Weise die Blasform 100 zu öffnen, bzw. zu schließen. Die Dichtung kann hier auch in der Drehachse 152 angeordnet sein.

Fig. 5b zeigt eine weitere Ausführungsform einer erfindungsgemäßen Blasform. Bei dieser Ausführungsform verläuft die Dichtungseinrichtung 120 auch durch einen Bereich der beiden Seitenteile 102 und 104, d. h. Abschnitte dieser Seitenteile 102 und 104 dienen auch hier als Abdichtung zwischen dem Reinraum 6 und der Umgebung des Reinraums. Die Dichtungseinrichtung kann hier auch die Formträger zweier benachbarter Blasstationen berühren. Dabei ist es möglich, dass die Dichtungseinrichtung, falls sie metallisch ausgebildet ist, an den jeweiligen Formträger angeschweißt ist.

Fig. 5c veranschaulicht einen Öffnungsvorgang für eine erfindungsgemäße Blasmaschine. Man erkennt hier, dass die jeweiligen Schwenkachsen 152 beider Blasstationen 8 außerhalb des Reinraums 6 angeordnet sind und die Hohlräume 105, in denen die Behältnisse geformt werden stets innerhalb des Reinraums 6 angeordnet sind. Auch ist hier die Schwenkachse eine gemeinsame Schwenkachse beider Seitenteile, d. h. hier werden vorteilhaft beide Seitenteile geschwenkt. Der eigentliche Antrieb für die Schwenkbewegung ist in Fig. 5c nicht gezeigt, kann aber beispielsweise mittels Kurvenrollen oder auch mittels Motoren an Hebeln angreifen, welche an der Schwenkachse 152 angeordnet sind. Auch hier ist es möglich, dass die Schwenkachse 152 derart ausgebildet ist, dass zwei ineinander angeordnete Stangen vorgesehen sind, an denen jeweils die beiden Seitenteile 102 und 104 angelenkt sind. Bei der in der Fig. 5a bis 5c gezeigten Ausführungsform kann die Dichtungseinrichtung 120, etwa in Form eines Faltenbalgs 122 auch teilweise zwischen den Seitenteilen bzw. den Formträgerhälften der Blasform angeordnet sein.

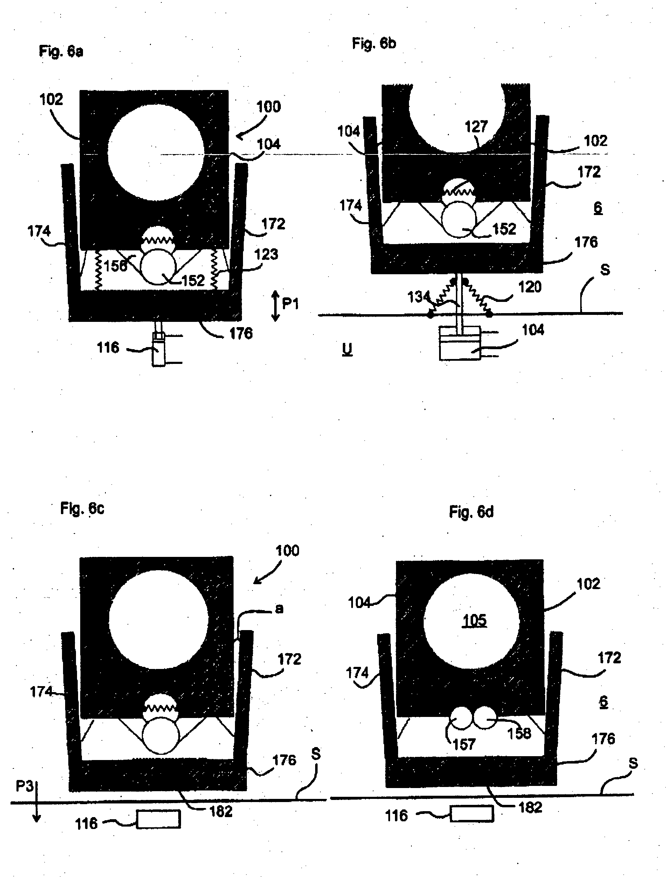

Fig. 6a zeigt eine weitere Ausführungsform für eine Betätigung des Öffnungs- und Schließvorgangs der Seitenteile 102 und 104. Bei dieser Ausführungsform ist ein Antrieb 104 in Form eines Hubantriebs, beispielsweise ein Pneumatik- oder Hydraulikzylinder vorgesehen, der einen Träger 176 bzw. ein Basisteil 176 entlang der Richtung P1 bewegt. An dem Träger 176 sind zwei hier leicht schräg verlaufende Seitenführungen 172 und 174 vorgesehen. Das Bezugszeichen 156 kennzeichnet einen Arm, an dem das Seitenteil 102 angeordnet ist.

Bei einer Bewegung nach vorne d.h. entgegen der in Fig. 6c durch den Pfeil P3 veranschaulichten Richtung pressen diese beiden Führungsteile 172 und 174 die beiden Seitenteile 104 und 102 zusammen und schließen damit die Blasform 100. Gleichzeitig bewirken die beiden Führungsteile 172 und 174 auch eine Verriegelung der Blasform, da ein Öffnen derselben nur möglich ist, wenn die beiden Führungsteile 172, 174 wieder nach unten abgezogen werden. Die Dichtungseinrichtung 123 verläuft hier zumindest abschnittsweise zwischen dem Basisteil 176 und den beiden Seitenteilen 102 und 104. Im Weiteren kann sich die Dichtungseinrichtung auch nach links und rechts an das Basisteil 176 anschließen. Damit ist auch hier die Antriebseinrichtung vollständig außerhalb des Reinraums angeordnet.

Im Betrieb verläuft die Richtung P3 bevorzugt zumindest auch in einer horizontalen Richtung. Damit werden hier die Seitenteile 102, 104 von hinten verschlossen. Die Führungsteile 172, 174 bewegen sich daher hier bevorzugt zumindest teilweise in einer radialen Richtung bezüglich einer Drehachse eines Blasrads, an dem die einzelnen Blasstationen angeordnet sind. Es wäre jedoch auch denkbar, dass die beiden Führungsteile 172, 174 von unten her an die Seitenteile herangeführt werden und die Seitenteile auf diese Weise verschließen. Es wäre auch möglich, dass eine weitere derartige Topfverriegelung 172, 174, 176 (alternativ oder zusätzlich vorgesehen) in den Fig. 6a bis 6b von oben her die Blasform 100 schließt bzw. verriegelt. Die hier dargestellten Bewegungsrichtungen der Führungsteile 172, 174 sind bei sämtlichen in den Figuren 6a - 6d gezeigten Ausführungsformen anwendbar.

Fig. 6b zeigt eine weitere Ausgestaltung für einen Schließmechanismus für die Blasform. Bei dieser Ausführungsform ist wiederum eine Dichteinrichtung 120 vorgesehen, die hier an der Kopplungseinrichtung 134 angreift. Damit sind hier auch die beiden Führungsteile 172 und 174 so wie auch das Basisteil 176 vollständig im Inneren des Reinraums 6 angeordnet. Eine weitere Dichtungseinrichtung 127 wäre hier zwischen den beiden Seitenteilen 102 und 104 angeordnet, diese ist jedoch nicht unbedingt erforderlich.

Bei der in Fig. 6c gezeigten Ausführungsform kommt die Vorrichtung ohne ein Antriebsmittel aus, welches die Reinraumgrenze S durchdringt. Stattdessen sind hier zusammenwirkende Magneten 116, 182 vorgesehen, die bewirken, dass beispielsweise das Basisteil 176 entlang des Pfeils P3 nach hinten gezogen werden kann, um auf diese Weise die Blasform zu öffnen. Falls die Antriebseinrichtung 104 hier als Magnet ausgeführt ist, wäre es durch eine entsprechende Magnetisierung auch möglich, eine abstoßende Wirkung zu erzielen und damit die Blasform 100 zu schließen. Auch bei der in den Fig. 6a bis 6c gezeigten Ausführungsformen kann der Formträger aus Edelstahl gefertigt sein. Weiterhin kann der Formträger hier glatte Oberflächen aufweisen, um die Schließ- und Öffnungsvorgänge zu vereinfachen. Es ist damit hier eine U-artige Verriegelung vorgesehen.

Die Neigung der beiden Führungsteile 172 und 174 liegt hier in einem Winkel a von zwischen 2° und 20°, bevorzugt zwischen 2° und 10° und besonders bevorzugt zwischen 2° und 8° bezüglich einer auf dem Basisteil 176 senkrecht stehenden Richtung.

Fig. 6d zeigt eine weitere Ausführungsform für einen derartigen Blasformmechanismus. Bei dieser Ausführungsform sind die beiden Seitenteile 102 und 104 an getrennten Schwenkwellen 157, 158 angelenkt. Auch hier wird eine Sterilraumgrenze S nicht von mechanischen Bauteilen durchtrennt, sodass auch das Basisteil 176 vollständig innerhalb des Reinraums 6 angeordnet ist.

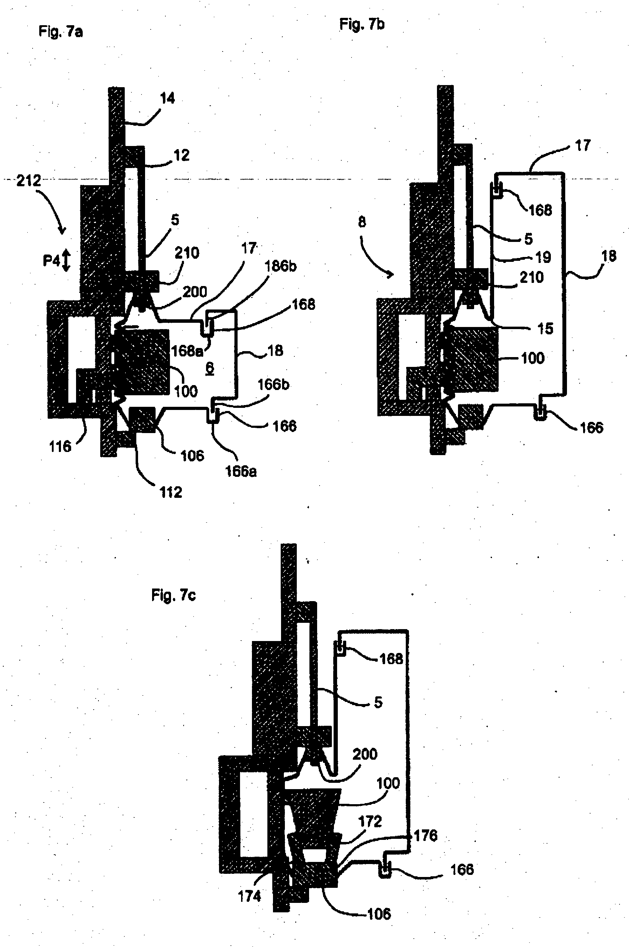

Die in den Fig. 7a bis 7d zeigen Darstellungen zur Veranschaulichung der konkreten Ausgestaltung des Reinraums 6, in dem die Blasform 100 angeordnet ist. Man erkennt hier wieder die Wandung 18 die stationär angeordnet ist und den Reinraum 6 gegenüber der Umgebung U abtrennt. Die Bezugszeichen 166 und 168 beziehen sich auf sogenannte Wasserschlösser, welche eine Abdichtung des Reinraums 6 erlauben. Zu diesem Zweck sind jeweils ringförmige Kanäle 166a und 168a vorgesehen, in denen hier ebenfalls ringförmige Segmente 168b und 166b eintauchen. In den ringförmigen Kanälen 166a und 168a befindet sich ein flüssiges Medium, wie beispielsweise Wasser. Bei dieser Ausführungsform bewegen sich die Kanäle. Es wäre jedoch auch denkbar, dass die Kanäle an der Wandung 18 und damit stationär angeordnet sind.

Das Bezugszeichen 5 bezieht sich auf eine Reckstange, welche ebenfalls in den Reinraum 6 einführbar ist. Das Bezugszeichen 200 kennzeichnet eine Blasdüse, welche zum Umformen der Kunststoffvorformlinge auf die Blasform bzw. die Behältnisse aufsetzbar ist, um auf diese Weise die darin angeordneten Kunststoffvorformlinge mit Druckluft zu beaufschlagen. Die Reckstange 5 wird mittels eines Schlittens 12, der an einem Träger 14 verschiebbar angeordnet ist, bewegt. Das Bezugszeichen 212 bezieht sich auf die Antriebseinrichtung, welche hier die Blasdüse 200 entlang des Doppelpfeils P4 bewegt. Weiterhin ist auch die Antriebseinrichtung 112 dargestellt, die zum Bewegen des Bodenteils 106 dient, sowie die Antriebseinrichtung 116, die zum Bewegen der beiden Seitenteile der Blasform 100 dient.

Fig. 7b zeigt eine weitere Ausgestaltung einer erfindungsgemäßen Blasstation 8. Man erkennt, dass hier das auch in Fig. 7a gezeigte obere Wasserschloss 168 sehr weit nach oben versetzt ist, um beispielsweise im Fall eines Blasformwechsels die Zugänglichkeit für den Bediener zu erleichtern. Weiterhin ist es hier auch denkbar, dass die Wandung 18 bzw. eine Haube, deren Bestandteil diese Wandung 18 ist, als Ganzes hochfahrbar ist, um auf diese Weise einen Blasformwechsel zu ermöglichen. Der Reinraum weist hier einen Knick 15 auf, der zwischen dem Deckel 17 und der senkrechten Wandung 19 angeordnet ist. Die senkrechte Wandung 19 liegt dabei oberhalb der Ventileinrichtung 210 und maximal 50 cm, bevorzugt maximal 25 cm entfernt von der Reckstange 5.

Fig. 7c zeigt eine weitere Ausführungsform einer erfindungsgemäßen Vorrichtung. Bei dieser Ausführungsform ist die Heranführung des Bodenteils 106 an die Blasform 100 kombiniert mit einer Verschließung der Seitenteile der Blasform. Damit ist hier eine Topfverriegelung vorgesehen, welche bei einer Aufwärtsbewegung der beiden Seitenführungen 172, 174 gleichzeitig auch die Seitenteile der Blasform verschließt. Vorteilhaft weist die Blasform 100 hier glatte Außenflächen auf, an denen die Seitenführungen 172, 174 leichter entlang gleiten können. Auch hier ist das obere Wasserschloss 168 relativ weit oben dargestellt. Es wäre jedoch auch hier eine Kombination mit der in Fig. 7a gezeigten Ausführungsform der beiden Wasserschlösser 166, 168 denkbar. An mindestens dem Basisteil 176 oder einem der Seitenteile 102, 104 sind dabei Kunststoffgleitlager angeordnet, die im Gegensatz zu Laufrollen ein hygienisches Design unterstützen. Laufrollen wären jedoch denkbar. Dieses Prinzip könnte genauso auf die Blasdüse 200 übertragen werden.

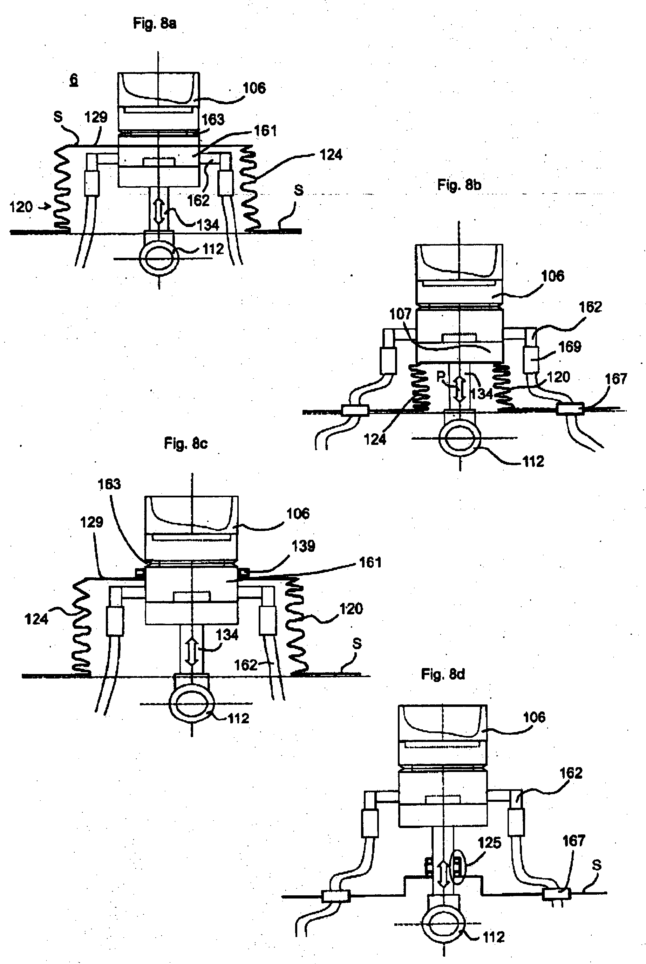

Die Fig. 8a bis 8d zeigen vier Ausführungsformen für die Bewegung eines Bodenteils 106. Bei der in Fig. 8a dargestellten Ausführungsform ist wiederum ein Dichtmittel 120 in Form eines Faltenbalgs 124 vorgesehen, welches hier an einem Wandbereich 129 der Wand des Sterilraums angeordnet ist. Zwischen dem hier als Faltenbalg 124 ausgeführten Dichtmittel 120 und der Kopplungseinrichtung 134 sind auch Verbindungsleitungen 162 geführt, über welche dem Bodenteil 106 ein Temperiermedium, wie beispielsweise eine Kühlflüssigkeit, zugeführt werden kann. Damit werden bei dieser Ausführungsform die besagten Zuführleitungen 162 und auch die Anschlüsse der Zuführleitungen an dem Bodenteil 106 außerhalb des Sterilraums geführt. Die Zuführleitungen 162 können hier als flexible Schläuche vorgesehen sein, welche bei einer Bewegung des Bodenteils 106 mitgeführt werden. Das Bezugszeichen 112 kennzeichnet wiederum die Antriebseinrichtung, welche die Bewegung des Bodenteils 106 bewirkt.

Formseitig kann damit die Dichteinrichtung 120 in Form eines Faltenbalgs 124 bei einer Ausführungsform unterhalb der Bodentasse und dem Zentrierring des Bodenteils 106 angebracht sein, aber oberhalb der Anschlüsse für die Temperiermedien, damit mitten in der Bodeneinheit. Dies hätte den Vorteil, dass die Zuführung der Temperiermedien (i. d. R. Schläuche) nicht im Sterilraum verlegt werden müssten. Nachteil wäre, dass die Bodeneinheit 106 beim Formenwechsel zerlegt werden müsste, und Lösungen jenseits vom derzeitigen Formenstandart gefunden werden müssten. Insbesondere der Austritt von Temperiermedium in den Sterilraum 6 ist hier zu beachten.

Eine Umgehung dieses Nachteils böte eine Ausführung (vgl. Fig. 8c), in der der Faltenbalg 124 so gestaltet ist, dass die Bodeneinheit 6 durch das obere Loch des Balgs gesteckt werden kann und passgenau auf der Zylinderfläche unterhalb des Zentrierrings 163 und oberhalb des Anschlussflansches 161 für die Temperiermedien zu sitzen kommt. Eine Fixierung könnte im Sterilraum durch eine Art Schlauchschelle erfolgen.

Der Wandbereich 129 kann hier fest mit dem Bodenteil 106 bzw. einem Träger des Bodenteils verschraubt sein. Das Bezugszeichen S kennzeichnet wiederum die Grenze des Reinraum 6 gegenüber seiner Umgebung.

Fig. 8b zeigt eine weitere Ausführungsform der Blasformanordnung. Bei dieser Ausführungsform setzt das Dichtmittel 120, d. h. der Faltenbalg 124 an einer Unterseite eines Trägers 107 des Bodenteils 106 an. Die Zuführleitungen 162 werden hier innerhalb des Sterilraums 6 geführt. Daher sind die jeweiligen Zuführleitungen hier als fest verschraubte Durchbrüche dicht angeordnet. Das Bezugszeichen 167 kennzeichnet ein Kopplungsstück, welches zum Durchführen der Zuführleitungen 162 durch die Sterilraumgrenze S bzw. eine entsprechende Wandung dient. Auch hier sind die Zuführleitungen 162 vorteilhaft flexibel ausgeführt, sodass in beiden Endstellungen des Bodenteils keine mechanischen Spannungen durch die Zuführleitungen 162 (genauer gesagt handelt es sich um eine Zuführleitung und eine Abführleitung für das Temperiermedium) auf die Kopplungseinrichtung 167 ausgeübt werden. Das Bezugszeichen 169 kennzeichnet Schnellkupplungen.

Das Bezugszeichen 112 kennzeichnet hier wieder die Antriebseinrichtung, die auch bei dieser Ausführungsform vollständig außerhalb des Reinraums 6 angeordnet ist.

Die in Fig. 8c gezeigte Ausführungsform ähnelt wiederum der in Fig. 8a gezeigten Ausführungsform, wobei hier auch die Anordnung des Dichtmittels 120 am Bodenteil dargestellt ist. Das Bezugszeichen 139 kennzeichnet ein Klemmmittel, mit dem der Wandbereich 129 an dem Bodenteil angeordnet ist, wie beispielsweise eine Schlauchschelle.

Fig. 8d zeigt eine weitere Ausführungsform einer erfindungsgemäßen Vorrichtung. Auch bei dieser Ausführungsform werden die Zuführleitungen 162 und die Anschlüsse an dem Bodenteil innerhalb des Reinraums 6 geführt.

Die komplette Bodeneinheit 106 wäre hier innerhalb des Sterilraums 6. Die Bodeneinheit 106 könnte so in den Sterilraum 6 gesetzt werden wie bei einer Standardmaschine auch, wobei die Schnellkupplungen 169 an die fest im Sterilraum angebrachten Schläuche (oder Rohre) angebracht werden.

Im Falle der letzteren Ausführung (vgl. Fig 8d) kann anstelle eines Faltenbalgs 124 auch eine Abdichtung der Durchführung des Bodenhubs in den Sterilbereich durch eine Dichtung 125 erfolgen, da nur noch eine einzelne Achse in den Reinraum 6 und heraus bewegt wird. Da die Sterilbereichsgrenze immer wieder überquert wird, wäre bei solch einer Lösung eine zusätzliche Gassperre 125 vorteilhaft, um ggf. an dem Schaft anhaftende Organismen zu töten, bevor sie die Sterilgrenze S übertreten können.

In allen Fällen wäre die Dichtungseinrichtung 120, 122, 123, 124, 125, 220 vorteilhaft in temperaturbeständigem Material ausgeführt (Wärmebeständigkeit > 121 °C).

Statt einer Gassperre 125 wäre auch eine Dampfsperre, Dampfkondensatsperre oder eine Sperre mit anderen Desinfektionsmitteln denkbar.

Durch diese Gassperre 125 wird wiederum ein Abdichten des Reinraums 6 gegenüber der Umgebung erreicht, wobei die Abdichtwirkung durch das Medium dieser Dichtung, beispielsweise Dampf, erzielt wird. Bei sämtlichen Ausführungsformen und insbesondere den in der Fig. 8a bis 8d gezeigten, könnte die Vorrichtung ein aus Kunststoff gefertigtes Zentriermittel aufweisen. Dieses Zentriermittel könnte dabei beispielsweise an dem Bodenteil 106 angeordnet sein.

Wie oben erwähnt, kann der Formträger bzw. die Blasform zusätzlich eine Verriegelungseinrichtung aufweisen, welche die beiden Seitenteile gegeneinander verriegelt. Durch die Dichtungseinrichtung wird erreicht, dass keine Keime oder Verschmutzungen von der Umgebung in den Reinraum 6 gelangen können. Dazu können die einzelnen Formträgerhälften jeweils Lagerungen aufweisen, wobei diese Lagerungen auch noch innerhalb des Reinraums 6 angeordnet sein können und mittels einer Dichtungseinrichtung oder Sperre gegenüber der Umgebung abgedichtet sind. Die Lagerung kann jedoch auch, wie teilweise dargestellt, au-βerhalb des Reinraums angeordnet sein.

Es wäre weiterhin auch noch möglich, dass in Bezug auf die Bodenform die genannten Temperiermedien durch die Kopplungseinrichtung hindurch dem Bodenteil 106 zugeführt werden. So könnte die Kopplungseinrichtung 134 im Inneren einen Hohlraum aufweisen, durch welchen hindurch ein Temperiermedium geführt werden kann. Als Dichtungseinrichtungen 120, 122, 123, 124, 125, 220 wurden im Rahmen der Figuren überwiegend Faltenbalge 122, 123, 124 dargestellt, es kann sich jedoch auch um eine Gassperre, Dampfsperre, eine Dampfkondensator- oder eine Flüssigkeitssperre 125 handeln. Die Dichtungseinrichtung 120, 122, 123, 124, 125, 220 ist weiterhin vorteilhaft temperaturbeständig. Auch die Bodenform 106 und die sonstigen Bauteile sind vorteilhaft temperaturbeständig ausgeführt. Weiterhin kann auch eine Wärmung von Teilen der Blasform 100 über einen Kühlkreislauf erfolgen, wobei dies je nach Anwendung vorgesehen sein kann.

Das Bodenteil 106 kann dabei, wie Eingangs erwähnt, über eine Bodenkurve angesteuert sein. Dabei wäre es auch möglich, dass eine entsprechende Hebeeinrichtung bzw. Kopplungseinrichtung 134 derart isoliert ist, dass eingebrachte Wärme nicht in die Linearführung überführt wird.

### Bezugszeichenliste

- 1: Umformungsvorrichtung
- 2: Transportrad
- 5: Reckstange
- 6: Reinraum
- 8: Blasstation
- 10: Kunststoffvorformlinge
- 11: Folgeeinrichtung
- 12: Schlitten
- 13: Boden, untere Wandung
- 14: Halterung, Träger
- 15: Knick
- 16: Seitenwand, Begrenzungswand
- 17: Deckel, Wandung
- 18: Wandung
- 19: senkrechte Wandung
- 20: Kunststoffbehältnis
- 22: Zuführeinrichtung
- 23: Halteeinrichtung
- 24: Abführeinrichtung
- 25: Dichtungseinrichtung
- 26: Träger
- 27: Dichtungseinrichtung
- 29: Haltekörper
- 30: Heizeinrichtung
- 31: Heizelemente
- 32: Sterilisationseinrichtung
- 34: Transporteinrichtung
- 36: Übergabeeinheit
- 37: Transportrad
- 40: Befüllungseinrichtung
- 42: Übergabeeinheit
- 44: Transporteinheit
- 50: Anlage
- 100: Blasform
- 102: Seitenteil
- 102a,104a: Schwenkachsen
- 104: Seitenteil
- 105: Hohlraum
- 106: Bodenteil
- 107: Träger
- 112: Antriebseinrichtung (Boden)
- 115: Gelenke
- 116: Antriebseinrichtung (Formträger)
- 118: Arme
- 119: Hauptarm
- 120, 220: Dichtungseinrichtung
- 122, 124: Faltenbalg
- 123: Dichtelement
- 125: Dichtung, Gassperre
- 129: Wandbereich
- 134,135: Kopplungseinrichtung, Kraftübertragungseinrichtung
- 139: Klemmmittel
- 140: Obere Sterilraumgrenze
- 152: Schwenkachse, Drehachse
- 156: Arm
- 157,158: Schwenkwellen
- 161: Anschlussflansch
- 162: Verbindungsleitung
- 163: Zentrierring
- 166,168: Wasserschlösser
- 166a, 168a: Kanäle
- 168b, 166b: Segmente
- 167: Kopplungsstück
- 169: Schnellkupplung
- 172,174: Seitenführungen
- 176: Basisteil, Träger
- 182: Magnet
- 200: Beaufschlagungseinrichtung, Blasdüse
- 210: Ventileinrichtung
- 212: Antriebseinrichtung

- L: Linie
- P: Doppelpfeil
- P1: Richtung
- P3: Pfeil
- P4: Doppelpfeil
- S: Sterilraumgrenze
- U: Umgebung
- X: Achse
- Y: Richtung

## Patentansprüche

1. Vorrichtung (1) zum Umformen von Kunststoffvorformlingen (10) zu Kunststoffbehältnissen (20) mit einer Transporteinrichtung (2), an der eine Vielzahl von Blasstationen (8) angeordnet ist, wobei jede dieser Blasstationen (8) eine Blasform (100) aufweist und die Vorrichtung (1) einen Reinraum (6) aufweist, innerhalb dessen die Kunststoffvorformlinge (10) transportiert werden können, und wobei jede Blasform (100) zwei Seitenteile (102, 104) und ein Bodenteil (106) aufweist, wobei die Seitenteile (102, 104) und das Bodenteil (106) gemeinsam einen Hohlraum (105) ausbilden innerhalb dessen ein Kunststoffvorformling (10) zu einem Kunststoffbehältnis (20) umformbar ist und wenigstens die diesen Hohlraum (105) begrenzenden Bereiche der Seitenteile (102, 104) und des Bodenteils (106) stets innerhalb des Reinraums (6) angeordnet sind wobei wenigstens eine erste Antriebseinrichtung (112, 116) zum Bewegen der Seitenteile (102, 104) oder zum Bewegen des Bodenteils (106) vorgesehen ist,
**dadurch gekennzeichnet, dass**
die Antriebseinrichtung (112, 116), welche eine Öffnungs- oder Schließbewegung der Blasform bewirkt, wenigstens teilweise außerhalb des Reinraums (6) angeordnet ist und eine Dichtungseinrichtung (120) vorgesehen ist, welche den Reinraum (6) gegenüber einem Bereich, in dem die Antriebseinrichtung (112, 116) angeordnet ist, abdichtet.

2. Vorrichtung (1) nach Anspruch 1,
**dadurch gekennzeichnet, dass**
wenigstens eine der außerhalb des Reinraums (6) angeordnete Antriebseinrichtungen (112, 116) über eine Kopplungseinrichtung (134) mit wenigstens einem Seitenteil (102, 104) oder mit dem Bodenteil (106) gekoppelt ist und diese Kopplungseinrichtung (134) sich durch eine Grenze des Reinraums (6) hindurch erstreckt.

3. Vorrichtung (1) nach wenigstens einem der vorangegangenen Ansprüche,
**dadurch gekennzeichnet, dass**
die Dichtungseinrichtung (120) ein elastisches Dichtmittel (122, 123, 124) aufweist.

4. Vorrichtung (1) nach wenigstens einem der vorangegangenen Ansprüche,
**dadurch gekennzeichnet, dass**
eine erste (112) und eine zweite Antriebseinrichtung (116) außerhalb des Reinraums (6) angeordnet ist.

5. Vorrichtung (1) nach wenigstens einem der vorangegangenen Ansprüche,
**dadurch gekennzeichnet, dass** wenigstens eine Antriebseinrichtung (112, 116) elektrisch oder magnetisch betätigt wird.

6. Vorrichtung (1) nach wenigstens einem der vorangegangenen Ansprüche,
**dadurch gekennzeichnet, dass**
die Dichteinrichtung (120) einen Faltenbalg (122, 123, 124) oder eine Gassperre (125) aufweist.

7. Vorrichtung (1) nach wenigstens einem der vorangegangenen Ansprüche,
**dadurch gekennzeichnet, dass**
die Vorrichtung (1) Zuführeinrichtungen (162) zum Zuführen einer Temperierflüssigkeit für die Blasformen (100) aufweist und Anschlüsse (161) für die Zuführeinrichtungen (162) innerhalb des Sterilraums (6) angeordnet sind.

8. Vorrichtung (1) nach wenigstens einem der vorangegangenen Ansprüche,
**dadurch gekennzeichnet, dass**
die Vorrichtung eine Beaufschlagungseinrichtung (200) aufweist, welche die Kunststoffvorformlinge mit einem gasförmigen Medium beaufschlagt und diese Beaufschlagungseinrichtung (200) innerhalb des Reinraums (6) angeordnet ist, und eine Antriebseinrichtung (212) zum Bewegen der Beaufschlagungseinrichtung (200) vorgesehen ist.

9. Vorrichtung nach Anspruch 7,
**dadurch gekennzeichnet, dass**
die Antriebseinrichtung (212) außerhalb des Reinraums (6) vorgesehen ist.

10. Vorrichtung (1) nach wenigstens einem der vorangegangenen Ansprüche,
**dadurch gekennzeichnet, dass**
an jeder Blasstation (8) eine Reckstange (5) zum Recken der Kunststoffvorformlinge (10) angeordnet ist und diese Reckstange (5) wenigstens zeitweise und abschnittsweise aus dem Reinraum (6) herausragt.

11. Anlage (50) zum Herstellen von Kunststoffbehältnissen (20) mit einer Vorrichtung (1) nach wenigstens einem der vorangegangenen Ansprüche und mit einer Heizeinrichtung (30), wobei diese Heizeinrichtung (30) an einer Transporteinrichtung (34) der Kunststoffvorformlinge stromaufwärts bezüglich der Vorrichtung (1) angeordnet ist.

12. Anlage (50) nach Anspruch 11,
**dadurch gekennzeichnet, dass**
die Anlage eine Sterilisationseinrichtung (32) aufweist, welche wenigstens einen Bereich der Kunststoffvorformlinge (10) vor Erreichen der Vorrichtung (1) sterilisiert.

13. Anlage (50) nach wenigstens einem der vorangegangenen Ansprüche,
**dadurch gekennzeichnet, dass**
die Anlage (50) einen weiteren Reinraum aufweist, der in der Transportrichtung der Kunststoffvorformlinge vor der Vorrichtung (1) angeordnet ist.

## Claims

1. An apparatus (1) for shaping plastics material pre-forms (10) to form plastics material containers (20) with a conveying device (2) on which a plurality of blowing stations (8) are arranged, wherein each of these blowing stations (8) has a blow mould (100) and the apparatus (1) has a clean room (6) inside which the plastics material pre-forms (10) can be conveyed, and wherein each blow mould (100) has two lateral parts (102, 104) and a base part (106), wherein the lateral parts (102, 104) and the base part (106) jointly form a cavity (105) inside which a plastics material pre-form (10) is capable of being shaped to form a plastics material container (20), and at least the regions of the lateral parts (102, 104) and of the base part (106) which delimit this cavity (105) are always arranged inside the clean room (6) and wherein at least one first drive device (112, 116) for moving the lateral parts (102, 104) or for moving the base part (106) is provided, **characterized in that** the drive device (112, 116), which effects an opening or closing movement of the blow mould, is arranged at least in part outside the clean room (6) and a sealing device (120) is provided which seals the clean room (6) off from a region in which the drive device (112, 116) is arranged.

2. An apparatus (1) according to claim 1, **characterized in that** at least one of the drive devices (112, 116) situated outside the clean room (6) is coupled by way of a coupling device (134) to at least one lateral part (102, 104) or to the base part (106) and this coupling device (134) extends through a boundary of the clean room (6).

3. An apparatus (1) according to at least one of the preceding claims, **characterized in that** the sealing device (120) has a resilient sealing means (122, 123, 124).

4. An apparatus (1) according to at least one of the preceding claims, **characterized in that** a first drive device (112) and a second drive device (116) are arranged outside the clean room (6).

5. An apparatus (1) according to at least one of the preceding claims, **characterized in that** at least one drive device (112, 116) is actuated electrically or magnetically.

6. An apparatus (1) according to at least one of the preceding claims, **characterized in that** the sealing device (120) has a folding bellows (122, 123, 124) or a gas barrier (125).

7. An apparatus (1) according to at least one of the preceding claims, **characterized in that** the apparatus (1) has supply devices (162) for supplying a tempering liquid for the blow moulds (100) and connections (161) for the supply devices (162) are arranged inside the clean room (6).

8. An apparatus (1) according to at least one of the preceding claims, **characterized in that** the apparatus has an application device (200) which acts upon the plastics material pre-forms with a gaseous medium and this application device (200) is arranged inside the clean room (6), and a drive device (212) for moving the application device (200) is provided.

9. An apparatus (1) according to claim 7, **characterized in that** the drive device (212) is provided outside the clean room (6).

10. An apparatus (1) according to at least one of the preceding claims, **characterized in that** a stretch rod (5) for stretching the plastics material pre-forms (10) is arranged at each blowing station (8) and this stretch rod (5) projects at least for a time and locally out of the clean room (6).

11. A plant (50) for producing plastics material containers (20), with an apparatus (1) according to at least one of the preceding claims and with a heating device (30), wherein this heating device (30) is arranged on a conveying device (34) of the plastics material pre-forms upstream with respect to the apparatus (1).

12. A plant (50) according to claim 11, **characterized in that** the plant has a sterilization device (32) which sterilizes at least one region of the plastics material pre-forms (10) before they reach the apparatus (1).

13. A plant (50) according to at least one of the preceding claims, **characterized in that** the plant (50) has a further clean room which is arranged upstream of the apparatus (1) in the conveying direction of the plastics material pre-forms.

## Revendications

1. Système (1) pour la transformation de préformes en matière plastique (10) en récipients en matière plastique (20), avec un dispositif de transport (2) sur lequel sont disposées plusieurs stations de soufflage (8), chacune desdites stations de soufflage (8) comportant un moule de soufflage (100) et le système (1) étant pourvu d'un espace stérile (6) à l'intérieur duquel les préformes en matière plastique (10) peuvent être transportées, et chaque moule de soufflage (100) comportant deux pièces latérales (102, 104) et une pièce de fond (106), les pièces latérales (102, 104) et la pièce de fond (106) formant ensemble une cavité (105), à l'intérieur de laquelle une préforme en matière plastique (10) peut être transformée en un récipient en matière plastique (20), et au moins les zones des pièces latérales (102, 104) et de la pièce de fond (106) délimitant ladite cavité (105) étant toujours disposées à l'intérieur de l'espace stérile (6), au moins un premier dispositif d'entraînement (112, 116) pour le déplacement des pièces latérales (102, 104) ou pour le déplacement de la pièce de fond (106) étant prévu,
**caractérisé en ce que**
le dispositif d'entraînement (112, 116) qui provoque une ouverture ou une fermeture du moule de soufflage, est situé au moins partiellement à l'extérieur de l'espace stérile (6), et **en ce qu'**un dispositif d'étanchéité (120) est prévu, lequel rend étanche l'espace stérile (6) par rapport à une zone où est situé le dispositif d'entraînement (112, 116).

2. Système (1) selon la revendication 1, **caractérisé en ce qu'**
au moins un des dispositifs d'entraînement (112, 116) situé à l'extérieur de l'espace stérile (6) est accouplé à au moins une pièce latérale (102, 104) ou à la pièce de fond (106) par un dispositif d'accouplement (134), et **en ce que** ledit dispositif d'accouplement (134) s'étend au-delà d'une limite de l'espace stérile (6).

3. Système (1) selon au moins une des revendications précédentes, **caractérisé en ce que**
le dispositif d'étanchéité (120) comprend un élément d'étanchéité élastique (122, 123, 124).

4. Système (1) selon au moins une des revendications précédentes, **caractérisé en ce qu'**
un premier dispositif d'entraînement (112) et un deuxième dispositif d'entraînement (116) sont situés à l'extérieur de l'espace stérile (6).

5. Système (1) selon au moins une des revendications précédentes, **caractérisé en ce qu'**
au moins un dispositif d'entraînement (112, 116) est actionné électriquement ou magnétiquement.

6. Système (1) selon au moins une des revendications précédentes, **caractérisé en ce que**
le dispositif d'étanchéité (120) comporte un soufflet (122, 123, 124) ou une barrière aux gaz (125).

7. Système (1) selon au moins une des revendications précédentes, **caractérisé en ce que**
ledit système (1) comporte des dispositifs d'alimentation (162) pour l'amenée d'un liquide d'équilibrage de température pour les moules de soufflage (100) et **en ce que** des raccords (161) pour les dispositifs d'alimentation (162) sont situés à l'intérieur de l'espace stérile (6).

8. Système (1) selon au moins une des revendications précédentes, **caractérisé en ce que**
ledit système comporte un dispositif d'application (200) qui applique un fluide gazeux dans les préformes en matière plastique, et **en ce que** le dispositif d'application (200) est situé à l'extérieur de l'espace stérile (6), et **en ce qu'**un dispositif d'entraînement (212) est prévu pour le déplacement du dispositif d'application (200).

9. Système selon la revendication 7, **caractérisé en ce que**
le dispositif d'entraînement (212) est prévu à l'extérieur de l'espace stérile (6).

10. Système (1) selon au moins une des revendications précédentes, **caractérisé en ce qu'**
une barre d'étirage (5) est disposée sur chaque station de soufflage (8) pour l'étirage des préformes en matière plastique (10), et **en ce que** ladite barre d'étirage (5) sort au moins temporairement et partiellement de l'espace stérile (6).

11. Installation (50) pour la fabrication de récipients en matière plastique (20), avec un système (1) selon au moins une des revendications précédentes, et avec un dispositif de chauffage (30), ledit dispositif de chauffage (30) étant disposé contre un dispositif de transport (34) des préformes en matière plastique en amont du système (1).

12. Installation (50) selon la revendication 11, **caractérisée en ce que**
ladite installation comporte un dispositif de stérilisation (32) qui stérilise au moins une partie des préformes en matière plastique (10) avant d'atteindre le système (1).

13. Installation (50) selon au moins une des revendications précédentes, **caractérisée en ce que**
ladite installation (50) comporte un autre espace stérile disposé devant le système (1) dans la direction de transport des préformes en matière plastique.
